# EUROPEAN PATENT APPLICATION

(11) **EP 4 644 213 A1**
(43) Date of publication of application: **05.11.2025**
(21) Application number: 24173515.8
(22) Date of filing: 30.04.2024
(51) Int. Cl.: B62D 5/06, B62D 5/04

(54) **HYBRID STEERING SYSTEM FOR A VEHICLE AND METHOD FOR OPERATING SUCH A HYBRID STEERING SYSTEM**

(71) Applicant: Volvo Truck Corporation, 405 08 Göteborg (SE)
(72) Inventor: Blond, J Marc, 69780 ST PIERRE DE CHANDIEU (FR); Villot, Olivier, 38460 ST ROMAIN DE JALIONAS (FR); Chaudet, Jerome, 01150 STE JULIE (FR)
(74) Representative: Lavoix

(57) **Abstract**

A hybrid steering system (20) for a vehicle (10), comprises:
- a mechanical linkage (22), configured to connect a steering wheel (12) of the vehicle to steerable wheels (14) of the vehicle;
- a steering assister (30), connected to the mechanical linkage and configured to apply a first torque to the mechanical linkage to assist steering of the steerable wheels;
- a hydraulic system (40), distinct from the steering assister, connected to the mechanical linkage and commutable between an activated configuration, in which the hydraulic system applies a second torque to the mechanical linkage to assist steering of the steerable wheels, and a disabled configuration, in which the hydraulic system does not apply the second torque to the mechanical linkage; and
- a pneumatic system (50), connected to the hydraulic system and configured to pressurize the hydraulic system when the hydraulic system is in the disabled configuration.

## Description

### TECHNICAL FIELD

The disclosure relates generally to steering system for vehicles. In particular aspects, the disclosure relates to a hybrid steering system for a vehicle and to a method for operating such a hybrid steering system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

It is known to provide steering systems in vehicles, to assist steering of steerable wheels of the vehicle by providing additional torque. Known steering systems comprise a hydraulic system, which typically comprises a hydraulic pump that is usually powered by an engine or motor of the vehicle, and a hydraulic actuator, which is powered by the pump to provide additional torque to assist steering of the steerable wheels. Such hydraulic systems are robust and capable of providing significant torque. They are therefore widely used in heavy-duty vehicles.

It is also known to provide hybrid steering systems, in particular for heavy-duty vehicles. Such hybrid steering systems comprise, in addition to the hydraulic system, an auxiliary power source, usually an electric system. Hybrid steering systems allow precise control of the additional torque provided to assist steering of the steerable wheels and provide redundancy. However, in such hybrid steering systems, the hydraulic pump needs to operate continuously, to maintain hydraulic pressure in the hydraulic system. Indeed, loss of pressure in the hydraulic system can lead to deterioration of the hydraulic system, in particular of the hydraulic actuator and the hydraulic pump, due to pressure peaks induced by forced movements of the steerable wheels caused by road surface defects. Permanent operation of the hydraulic system, even when the auxiliary power source would be sufficient to assist steering of the steerable wheels, leads to higher energy consumption.

There is therefore a need for an improved hybrid steering system in which the hydraulic system can be safely deactivated.

### SUMMARY

According to a first aspect of the disclosure, a hybrid steering system for a vehicle comprises:
- a mechanical linkage, configured to connect a steering wheel of the vehicle to steerable wheels of the vehicle;
- a steering assister, connected to the mechanical linkage and configured to apply a first torque to the mechanical linkage to assist steering of the steerable wheels;
- a hydraulic system, distinct from the steering assister, connected to the mechanical linkage and commutable between an activated configuration, in which the hydraulic system applies a second torque to the mechanical linkage to assist steering of the steerable wheels, and a disabled configuration, in which the hydraulic system does not apply the second torque to the mechanical linkage; and
- a pneumatic system, connected to the hydraulic system and configured to pressurize the hydraulic system when the hydraulic system is in the disabled configuration.

The first aspect of the disclosure may seek to allow the hydraulic system to be safely deactivated: thanks to the pneumatic system, the hydraulic system is kept pressurized when not in use, thus protecting its components from damage provoked by pressure peaks, for instance induced by forced movements of the steerable wheels caused by road surface defects. A technical benefit may include reducing the energy consumption of the hybrid steering system.

Optionally in some examples, including in at least one preferred example, the hydraulic system comprises a fluid reservoir and the pneumatic system is configured to pressurize the fluid reservoir when the hydraulic system is in the disabled configuration. A technical benefit may include easily pressurizing the hydraulic system when it is in the disabled configuration.

Optionally in some examples, including in at least one preferred example, the hydraulic system further comprises a hydraulic pump, a hydraulic actuator and a hydraulic circuit connecting together the fluid reservoir, the hydraulic pump and the hydraulic actuator. When the hydraulic system is in its activated configuration, the hydraulic pump feeds the hydraulic actuator with oil from the fluid reservoir and the hydraulic actuator applies the second torque to the mechanical linkage. The pneumatic system is configured to pressurize the fluid reservoir and the hydraulic circuit when the hydraulic system is in the disabled configuration. A technical benefit may include protecting the hydraulic pump and the hydraulic actuator when the hydraulic system is in the disabled configuration.

Optionally in some examples, including in at least one preferred example, the hydraulic circuit forms a loop between the fluid reservoir, the hydraulic pump and the hydraulic actuator and the pneumatic system is configured to pressurize the entire hydraulic circuit loop when the hydraulic system is in the disabled configuration. A technical benefit may include protecting the hydraulic pump and the hydraulic actuator without affecting the operation of the mechanical linkage, as the hydraulic pressure is balanced on both sides of the hydraulic actuator.

Optionally in some examples, including in at least one preferred example, the hydraulic pump is configured to be driven by an electric motor or an internal combustion engine of the vehicle when the hydraulic system is in its activated configuration A technical benefit may include facilitating the operation of the hydraulic pump.

Optionally in some examples, including in at least one preferred example, the pneumatic system comprises a pneumatic pressure source, a vent and a pneumatic control device connected to the pneumatic pressure source, to the vent and to the fluid reservoir, the pneumatic control device being commutable between a depressurized configuration, in which the pneumatic control device connects the fluid reservoir to the vent and disconnects the fluid reservoir from the pneumatic pressure source to depressurize the fluid reservoir; and a pressurized configuration, in which the pneumatic control device connects the fluid reservoir to the pneumatic pressure source and disconnects the fluid reservoir from the vent to pressurize the fluid reservoir. A technical benefit may include easily and reliably pressurizing the fluid reservoir when the hydraulic system is in the disabled configuration.

Optionally in some examples, including in at least one preferred example, the pneumatic control device is configured to automatically commute in the pressurized configuration when the hydraulic system is in the disabled configuration A technical benefit may include always protecting the components of the hydraulic system when it is in the disabled configuration.

Optionally in some examples, including in at least one preferred example, the pneumatic pressure source is a compressed-air reservoir of the vehicle. A technical benefit may include facilitating the operation of the pneumatic system and reducing its operative cost.

Optionally in some examples, including in at least one preferred example, the mechanical linkage comprises a steering box and the hydraulic system is connected to the steering box and configured to apply the second torque to the steering box. A technical benefit may include obtaining a reliable and efficient hydraulic system.

Optionally in some examples, including in at least one preferred example, the steering assister is an electric power steering system comprising an electric motor and the electric power steering system is commutable between an activated configuration, in which the electric motor applies the first torque to the mechanical linkage, and a disabled configuration, in which the electric motor does not apply the first torque to the mechanical linkage. A technical benefit may include obtaining a versatile and efficient hybrid steering system.

Optionally in some examples, including in at least one preferred example, the steering assister and the hydraulic system are configured to apply respectively the first torque and the second torque to the mechanical linkage simultaneously. A technical benefit may include obtaining a versatile and efficient hybrid steering system as the assistance torque provided by the hybrid steering system can be adjusted more easily and precisely.

According to a second aspect of the disclosure, a vehicle comprises a hybrid steering system as described above.

According to a third aspect of the disclosure, a method for operating the hybrid system as described above is provided. The hybrid steering system further comprises a control unit configured to control the steering assister, the hydraulic system and the pneumatic system. The method comprises controlling, by the control unit, the steering assister, the hydraulic system and the pneumatic system to either:
- apply both the first torque and the second torque to the mechanical linkage to assist steering of the steerable wheels;
- apply only the first torque to the mechanical linkage to assist steering of the steerable wheels and pressurize the hydraulic system with the pneumatic system; or
- apply only the second torque to the mechanical linkage to assist steering of the steerable wheels.

The third aspect of the disclosure may seek to allow using only the hydraulic system, only the steering assister, or both the hydraulic system and the steering assister to assist steering of the steerable wheels, while protecting the hydraulic system when it is not in use. A technical benefit may include reducing the energy consumption of the hybrid steering system.

Optionally in some examples, including in at least one preferred example, the mechanical linkage comprises a steering column, the hybrid steering system comprises a sensor configured to provide the control unit with data representative of a torque applied by the steering wheel to the steering column and the method comprises controlling, by the control unit, the steering assister, the hydraulic system and the pneumatic system based on the data provided by the sensor to the control unit

A technical benefit may include adjusting the assisting torque provided by the hybrid steering system to the torque required, providing more pleasant and efficient assistance.

Optionally in some examples, including in at least one preferred example, the method comprises controlling, by the control unit, the steering assister, the hydraulic system and the pneumatic system to apply only the first torque to the mechanical linkage to assist steering of the steerable wheels and pressurize the hydraulic system with the pneumatic system when a travel speed of the vehicle is above a predefined value. A technical benefit may include reducing the energy consumption of the vehicle at high speed by disabling the hydraulic system, which is not required at high speed.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** shows a schematic view of an exemplary vehicle according to an example, the vehicle including a hybrid steering system according to an example and being in a first configuration of use.
**FIG 2** shows a schematic view of the same exemplary vehicle, the hybrid steering system being in a second configuration of use.

### DETAILED DESCRIPTION

The detailed description set forth below provides information and examples of the disclosed technology with sufficient detail to enable those skilled in the art to practice the disclosure.

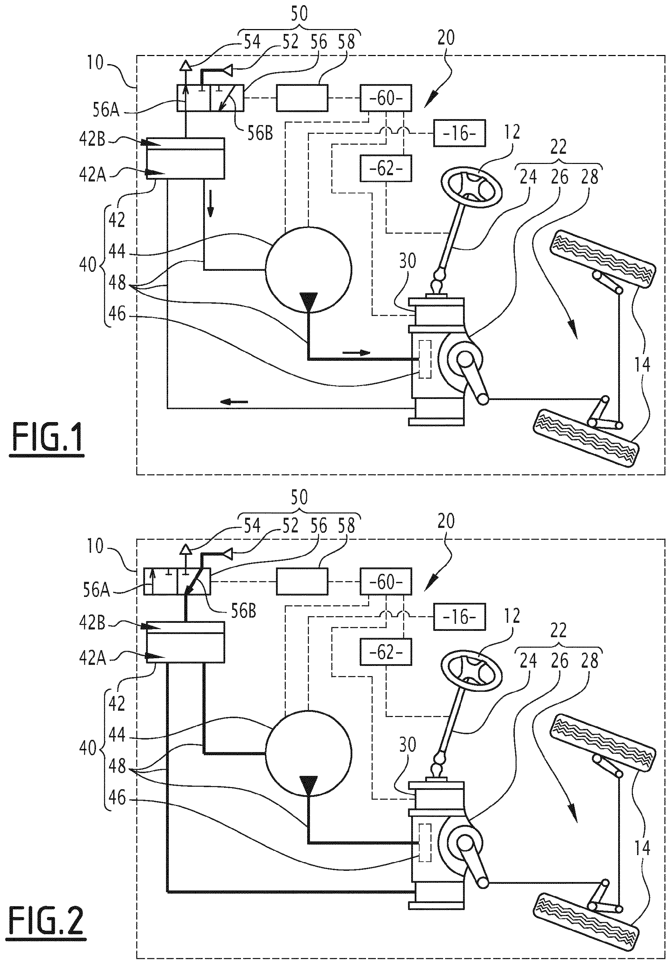

An exemplary vehicle 10, represented in simplified form by a rectangle, is shown in Figures 1 and 2. The vehicle 10 includes a steering wheel 12, steerable wheels 14, a propulsion system 16 and a hybrid steering system 20.

In the example, the vehicle 10 comprises two steerable wheels 14. As an alternative, not shown, the vehicle 10 comprises a different number of steerable wheels, for example four steerable wheels.

The propulsion system 16 preferably comprises at least one electric motor and/or an internal combustion engine.

The hybrid steering system 20 comprises a mechanical linkage 22 connecting the steering wheel 12 to the steerable wheels 14. The mechanical linkage 22 comprises a steering column 24, a steering box 26 and a steering linkage 28, whose operation is known per se. The mechanical linkage 22 allows for transmitting a torque applied onto the steering wheel 12 to the steerable wheels 14, in order to steer the vehicle 10.

The hybrid steering system 20 comprises a steering assister 30, which is connected to the mechanical linkage 22 and which is able to apply a first torque to the mechanical linkage to assist steering of the steerable wheels 14.

The steering assister 30 is commutable between an activated configuration, in which the steering assister delivers the first torque to the mechanical linkage 22, and a disabled configuration, or deactivated configuration, in which the steering assister does not deliver the first torque to the mechanical linkage and therefore does not assist steering of the steerable wheels.

In practice, the value of the first torque is not constant and varies depending on the steering angle of the steering wheel 12 and on the value of a torque applied by the steering wheel 12 to the steering column 24. In particular, while the steering assister 30 is in its activated configuration, the value of the first torque can be equal to zero, for example when the torque applied by the steering wheel 12 to the steering column 24 is equal to zero.

The steering assister 30 is preferably configured to provide to the mechanical linkage 22 a maximum torque comprised between 250 N.m and 700 N.m on steering linkage 28.

In the example, the steering assister 30 is connected the steering box 26. Preferably, the steering assister 30 is an electric power steering system, or motor-driven power steering system, which comprises an electric motor, not shown, configured to apply the first torque to the steering box 26. The operation of the steering assister 30 is known per se and is not further described.

In addition of the steering assister 30, the hybrid steering system 20 comprises a hydraulic system 40, which is connected to the mechanical linkage 22 and which is able to apply a second torque to the mechanical linkage to assist steering of the steerable wheels 14. The hydraulic system 40 and the steering assister 30 are therefore distinct from each other.

The hydraulic system 40 is commutable between an activated configuration, in which the hydraulic system delivers the second torque to the mechanical linkage 22, and a disabled configuration, or deactivated configuration, in which the hydraulic system does not deliver the second torque to the mechanical linkage and therefore does not assist steering of the steerable wheels.

In practice, the value of the second torque is not constant and varies depending on the steering angle of the steering wheel 12 and on the value of a torque applied by the steering wheel to the steering column 24. In particular, while the hydraulic system 40 is in its activated configuration, the value of the second torque can be equal to zero, for example when the torque applied by the steering wheel 12 to the steering column 24 is equal to zero. In other words, the hydraulic system 40 is in its activated configuration when it is susceptible to provide the second torque to the mechanical linkage 22.

The hydraulic system 40 is preferably able to provide to the mechanical linkage 22 a maximum torque comprised between 4000 N.m and 9000 N.m on steering linkage 28. Hence, the maximum torque provided by the hydraulic system 40 is greater than the maximum torque provided by the steering assister 30. In other words, the hydraulic system 40 can provide more steering power than the steering assister 30.

In the example, the hydraulic system 40 comprises a fluid reservoir 42, a hydraulic pump 44, a hydraulic actuator 46 and a hydraulic circuit 48 connecting together the fluid reservoir 42, the hydraulic pump 44 and the hydraulic actuator 46. Preferably, the hydraulic circuit 48 forms a closed loop between the fluid reservoir 42, the hydraulic pump 44 and the hydraulic actuator 46. The fluid reservoir 42 is advantageously airtight.

The hydraulic system 40 operates by using a liquid fluid, which is preferably oil, such as mineral oil.

As visible on Figures 1 and 2, the fluid reservoir 42 is not full of liquid fluid: a lower part 42A of the fluid reservoir 42 is filled with liquid fluid and an upper part 42B of the fluid reservoir 42 is filled with gas, preferably with air.

Preferably, the hydraulic pump 44 is driven by the propulsion system 16 of the vehicle 10. Alternatively, the hydraulic pump 44 is driven by a dedicated electric motor or by another power source.

The hydraulic pump 44 is preferably a positive-displacement pump, such as, for example, a rotary vane pump or a gear pump. The hydraulic pump 44 feeds the hydraulic actuator 46 with oil from the fluid reservoir 42.

The hydraulic actuator 46 is powered by the hydraulic pump 44 and applies the second torque to the mechanical linkage 22. In the example, the hydraulic actuator 46 applies the second torque to the steering box 26. Preferably, the hydraulic actuator 46 is a hydraulic cylinder or a hydraulic piston.

The hydraulic circuit 48 allows for the liquid fluid stored in the fluid reservoir 42 to feed the hydraulic pump 44 and the hydraulic actuator 46.

When the hydraulic system 40 is in its activated configuration, the hydraulic pump 44 operates and, therefore, the hydraulic actuator 46 applies the second torque to the mechanical linkage 22, or is susceptible to apply the second torque to the mechanical linkage. Hence, in this configuration, the hydraulic circuit 48 is pressurized by the hydraulic pump 44 between the hydraulic pump and the hydraulic actuator 46. In the example, the hydraulic system 40 is designed so that the hydraulic circuit 48 between the hydraulic actuator 46 and the fluid reservoir 42, and between the fluid reservoir and the hydraulic pump 44, is not pressurized by the hydraulic pump 44 when the hydraulic pump is operating, i.e. the fluid in these portions of the hydraulic circuit circulates without being pressurized.

As an alternative, not shown, the whole loop formed by the hydraulic circuit 48 is pressurized by the hydraulic pump 44 when the hydraulic pump is operating, i.e. when the hydraulic system 40 is in its activated configuration.

When the hydraulic system 40 is in its disabled configuration, the hydraulic pump 44 is not operating and therefore the hydraulic actuator 46 is not applying the second torque to the mechanical linkage 22.

In other words, the hydraulic system 40 is in its disabled configuration when the hydraulic pump 44 is not operating and is in its activated configuration when the hydraulic pump is operating.

The operation of the hydraulic system 40 and particularly of the hydraulic actuator 46 is known per se and is not further described.

The operation of the steering assister 30 and of the hydraulic system 40 are independent of each other, so that they can apply respectively the first torque and the second torque to the mechanical linkage 22 simultaneously, i.e. they can both be in their respective activated configuration simultaneously. Simultaneous operation of the steering assister 30 and of the hydraulic system 40 is particularly advantageous to allow precise control of the additional torque provided to assist steering of the steerable wheels 14. Furthermore, the steering assister 30 can be in its activated configuration while the hydraulic system 40 is in its disabled configuration and the hydraulic system 40 can be in its activated configuration while the steering assister 30 is in its disabled configuration.

The hybrid steering system 20 comprises a pneumatic system 50, which is connected to the hydraulic system 40 and configured to pressurize the hydraulic system when the hydraulic system is not applying the second torque to the mechanical linkage 22, i.e. when the hydraulic system is in its disabled configuration. More precisely, the pneumatic system 50 is configured to pressurize the fluid reservoir 42 and consequently the hydraulic circuit 48, the hydraulic pump 44 and the hydraulic actuator 46.

The pneumatic system 50 comprises a pneumatic pressure source 52, a vent 54 and a pneumatic control device 56.

The pneumatic pressure source 52 is preferably a compressed-air reservoir of the vehicle 10, which can supply compressed air to other systems of the vehicle, such as brakes or air suspensions. Alternatively, the pneumatic pressure source 52 is a pneumatic pump dedicated to the pneumatic system 50, delivering compressed air or compressed gas. Preferably, the pneumatic pressure source 52 delivers compressed air or gas at a pressure comprised between 8 bars and 15 bars, preferably equal to 12.5 bars.

The vent 54 is connected to the atmosphere and is preferably a pressure relief valve.

In the example, the pneumatic control device 56 is a 3-way valve.

The pneumatic control device 56 is connected, on the one hand, to the fluid reservoir 42, more precisely to the upper part 42B of the fluid reservoir, and on the other hand to the pneumatic pressure source 52 and to the vent 54.

The pneumatic control device 56 is commutable between a depressurized configuration, represented in Figure 1, and a pressurized configuration, represented in Figure 2. Furthermore, the hydraulic system 40 is represented in its activated configuration in Figure 1, and is represented in its disabled configuration in Figure 2.

In Figures 1 and 2, the fluid connections between the components of the hybrid steering system 20 are shown as solid lines, i.e. continuous lines, and other connections, such as mechanical connections and data exchanges, are shown as dashed lines. Furthermore, pressurized fluid connections are shown as thick continuous lines, whereas non-pressurized fluid connections are shown as thin solid lines.

In the depressurized configuration of Figure 1, the pneumatic control device 56 connects the fluid reservoir 42, more precisely its upper part 42B, to the vent 54 and disconnects the fluid reservoir from the pneumatic pressure source 52. Hence, in the depressurized configuration, the fluid reservoir 42 is connected to the atmosphere and cannot be pressurized by the pneumatic pressure source 52. In other words, in the depressurized configuration of the pneumatic control device 56, the pneumatic system 50 does not affect the operation of the hydraulic system 40. The pneumatic control device 56 is commuted in its depressurized configuration when the hydraulic system is activated, as described below.

In the pressurized configuration of Figure 2, the pneumatic control device 56 connects the fluid reservoir 42, more precisely its upper part 42B, to the pneumatic pressure source 52 and disconnects the fluid reservoir from the vent 54. Hence, in the pressurized configuration, the fluid reservoir 42 is isolated from the atmosphere and the pneumatic pressure provided by the pneumatic pressure source 52 pressurizes the fluid reservoir 42 and consequently the hydraulic circuit 48, the hydraulic pump 44 and the hydraulic actuator 46. The pneumatic control device 56 is commuted in its pressurized configuration when the hydraulic system is in the disabled configuration, as described below. More precisely, the compressed air or compressed gas provided by the pneumatic pressure source 52 pressurizes the upper part 42B of the fluid reservoir 42 and therefore applies pressure onto the liquid fluid contained in the lower part 42B of the fluid reservoir, thus pressurizing the liquid fluid.

Therefore, in the pressurized configuration, the hydraulic system 40 is pressurized at the pressure delivered by the pneumatic pressure source 52.

Practically speaking, in the example, the pneumatic control device 56 comprises a first fluid connector 56A and a second fluid connector 56B, the first fluid connector 56A being connected to the fluid reservoir 42 and to the vent 54 in the depressurized configuration and the second fluid connector 56B being connected to the fluid reservoir 42 and to the pneumatic pressure source 52 in the pressurized configuration.

In the example, the pneumatic system 50 comprises an actuator 58 mechanically connected to the pneumatic control device 56 and configured to move the pneumatic control device between the two configurations respectively represented on Figures 1 and 2. Hence, to commute the pneumatic control device 56 between its pressurized and depressurized configurations, no movement of the fluid reservoir 42, of the pneumatic pressure source 52 and of the vent 54 is needed and only the pneumatic control device 56 is moved by the actuator 58. The movement of the pneumatic pressure source 52 allows to connect the fluid reservoir 42 either to the first fluid connector 56A or to the second fluid connector 56B.

In the example of Figures 1 and 2, the movement of the pneumatic control device 56 is a translation. As an alternative, not shown, the movement of the pneumatic control device 56 is a rotation or a combination of rotation and translation.

As an alternative, not shown, the pneumatic control device 56 is commuted between its two configurations by other means than an actuator. For example, the pneumatic control device 56 is connected to the hydraulic pump 44 and the configuration of the pneumatic control device depends of the operating of the hydraulic pump, so as to automatically commute in the pressurized configuration when the hydraulic system 40 is in the disabled configuration, i.e. when the hydraulic pump is not operating.

The hybrid steering system 20 further comprises a control unit 60, which is connected to, and controls, the pump 44, the steering assister 30, the pneumatic control device 56 and the actuator 58. In particular, the control unit 60 controls the actuator 58 so as to commute the pneumatic control device 56 between its pressurized and depressurized configurations.

Advantageously, the control unit 60 is configured to automatically commute the pneumatic control device 56 in its pressurized configuration, by controlling the actuator 58, when the hydraulic system 40 is not applying the second torque to the mechanical linkage 22, i.e. when the hydraulic system is in its disabled configuration. Hence, the pneumatic control device 56 is automatically commuted in its pressurized configuration when the hydraulic system 40 is in the disabled configuration.

The hybrid steering system 20 further comprises a sensor 62 connected to the steering column 24 and which provides to the control unit 60 data representative of a torque applied by the steering wheel 12 to the steering column. The sensor 62 is a torque sensor, for example a torsion bar whose torsion angle is measured.

A method for operating the hybrid steering system 20 is now described.

The method comprises controlling, by the control unit 60, the steering assister 30, the hydraulic system 40, more precisely the hydraulic pump 42, and the pneumatic system 50, more precisely the pneumatic control device 56, to choose an operating configuration between the three following operating configurations.

In a first operating configuration, the steering assister 30 and the hydraulic system 40 are controlled to apply both the first torque and the second torque to the mechanical linkage 22 to assist steering of the steerable wheels 14. Hence, in the first operating configuration, the steering assister 30 is controlled by the control unit 60 to be in its activated configuration, the hydraulic system 40 is controlled by the control unit 60 to be in its activated configuration and the pneumatic control device 56 of the pneumatic system 50 is commuted by the control unit 60 in its depressurized configuration represented on Figure 1.

In a second operating configuration, the steering assister 30, the hydraulic system 40 and the pneumatic control device 56 of the pneumatic system 50 are controlled to apply only the first torque to the mechanical linkage 22 to assist steering of the steerable wheels 14 and pressurize the hydraulic system 40 with the pneumatic system 50. Hence, in the second operating configuration, the steering assister 30 is controlled by the control unit 60 to be in its activated configuration, the hydraulic system 40 is controlled by the control unit 60 to be in its disabled configuration and the pneumatic control device 56 of the pneumatic system 50 is commuted by the control unit 60 in its pressurized configuration represented on Figure 2.

In a third operating configuration, the steering assister 30 and the hydraulic system 40 are controlled to apply only the second torque to the mechanical linkage 22 to assist steering of the steerable wheels 14. Hence, in the third operating configuration, the steering assister 30 is controlled by the control unit 60 to be in its disabled configuration, the hydraulic system 40 is controlled by the control unit 60 to be in its activated configuration and the pneumatic control device 56 of the pneumatic system 50 is commuted by the control unit 60 in its depressurized configuration represented on Figure 1.

The control unit 60 chooses an operating configuration between the first, second and third operating configurations based on at least one selection criterion. Preferably, the third operating configuration is only chosen in the event of failure of the steering assister 30, as using simultaneously the steering assister 30 and the hydraulic system 40 is generally more advantageous than using only the hydraulic system 40 to provide additional torque to the mechanical linkage 22.

Preferably, a first selection criterion is based on data representative of the torque applied by the steering wheel 12 to the steering column 24 provided by the sensor 62 to the control unit 60. For example, the first operating configuration is chosen when the torque applied by the steering wheel 12 to the steering column 24 is lower than a first predefined value and the second operating configuration is chosen when the torque applied by the steering wheel 12 to the steering column 24 is greater than the first predefined value, the first predefined value being, for example, comprised between 10 N.m and 40 N.m. Indeed, the hydraulic system 40 is capable of providing more steering assistance than the steering assister 30, so that using the hydraulic system 40 when high torque is applied to the steering column 24 is appropriate.

Preferably, a second selection criterion is based on a travel speed of the vehicle 10. For example, the first operating configuration is chosen when the travel speed of the vehicle 10 is lower than a second predefined value and the second operating configuration is chosen when the travel speed of the vehicle 10 is greater than the second predefined value, the second predefined value being, for example, comprised between 40 km/h and 70 km/h, for example equal to 60 km/h. Indeed, at low speed, more steering assistance is generally required than at high speed.

Preferably, a third selection criterion is based on the type of terrain on which the vehicle 10 is travelling. For example, the second operating configuration is chosen when the vehicle 10 travels on a motorway (or freeway) and the first operating configuration is chosen when the vehicle 10 travels in a city or off-road. Indeed, less steering assistance is generally required on motorway than in cities or when the vehicle is off-road. The type of terrain on which the vehicle 10 is travelling can be detected from GPS data, from an on-board camera and/or from other source of information.

In practice, the control unit 60 chooses an operating configuration between the first, second and third operating configurations on the basis of one or more of the first, second and third selection criteria. In addition, more selection criterion can be considered.

The hybrid steering system 20 is particularly advantageous to reduce consumption of the vehicle 10. Indeed, thanks to the pneumatic system 50, the hydraulic system 40 can be safely deactivated when not needed to assist steering of the steerable wheels 14, for example when the vehicle travels at high speed.

Without the pneumatic system 50, the hydraulic circuit 48 would not be pressurized when the hydraulic system 40 is in its disabled configuration, so that pressure peaks induced by forced movements of the steerable wheels 14 caused by road surface defects could lead to degradation of the hydraulic system 40, and in particular of the hydraulic actuator 46 and of the hydraulic pump 44. Indeed, such pressure peaks can lead to locally high pressure zones and to locally depressurized zones, or even cavitation, in the hydraulic system 40, as well as unwanted movements of internal components of the hydraulic actuator 46 and of the hydraulic pump 44, which can damage the internal components of the hydraulic actuator and of the hydraulic pump.

Thanks to the pneumatic system 50, the hydraulic circuit 48 is pressurized even when the hydraulic system 40 is in its disabled configuration, thus avoiding these pressure peaks. The hydraulic system 40, and in particular the hydraulic pump 44 and the hydraulic actuator 46, are therefore protected.

Furthermore, as the whole loop of the hydraulic circuit 48 is pressurized by the pneumatic system 50, there is no pressure difference between the inlet and outlet of the hydraulic actuator 46, so that the hydraulic actuator does not apply any torque to the steering box 26. Hence, the hydraulic circuit 40 does not assist steering of the steerable wheels 14 when pressurized by the pneumatic system 50.

Hence, thanks to the pneumatic system 50, the hydraulic system 40 can be safely disabled. This allows using only the steering assister 30 to assist steering of the steerable wheels 14 in certain operating configurations of the vehicle 10, such as at high speed. Using only the steering assister 30 and disabling the hydraulic system 40 is particularly advantageous to reduce the energy consumption of the vehicle 10, as the hydraulic system 40 and in particular the hydraulic pump 44, consumes more energy than the steering assister 30, particularly when the steering assister is an electric power steering system. Thus, the hydraulic system 40 can be activated only when needed, in particular when the vehicle 10 is traveling at low speed. The hybrid steering system 20 therefore combines the advantages of the previously known hybrid steering system, i.e. redundancy and precise control of the additional torque provided to assist steering of the steerable wheels, while consuming less energy.

Example 1: a hybrid steering system 20 for a vehicle 10, the hybrid steering system comprising:
- a mechanical linkage 22, configured to connect a steering wheel 12 of the vehicle 10 to steerable wheels 14 of the vehicle;
- a steering assister 30, connected to the mechanical linkage and configured to apply a first torque to the mechanical linkage to assist steering of the steerable wheels 14;
- a hydraulic system 40, distinct from the steering assister 30, connected to the mechanical linkage 22 and commutable between an activated configuration, in which the hydraulic system 40 applies a second torque to the mechanical linkage to assist steering of the steerable wheels 14, and a disabled configuration, in which the hydraulic system does not apply the second torque to the mechanical linkage; and
- a pneumatic system 50, connected to the hydraulic system 40 and configured to pressurize the hydraulic system 40 when the hydraulic system is in the disabled configuration.

Example 2: the hybrid steering system 20 of example 1, wherein the hydraulic system 40 comprises a fluid reservoir 42 and wherein the pneumatic system 50 is configured to pressurize the fluid reservoir 42 when the hydraulic system 40 is in the disabled configuration.

Example 3: the hybrid steering system 20 of example 2, wherein the hydraulic system 40 further comprises a hydraulic pump 44, a hydraulic actuator 46 and a hydraulic circuit 48 connecting together the fluid reservoir 42, the hydraulic pump and the hydraulic actuator, wherein, when the hydraulic system 40 is in its activated configuration, the hydraulic pump 44 feeds the hydraulic actuator 46 with oil from the fluid reservoir 42 and the hydraulic actuator applies the second torque to the mechanical linkage 22, and wherein the pneumatic system 50 is configured to pressurize the fluid reservoir 42 and the hydraulic circuit 48 when the hydraulic system 40 is in the disabled configuration.

Example 4: the hybrid steering system 20 of example 3, wherein the hydraulic circuit 48 forms a loop between the fluid reservoir 42, the hydraulic pump 44 and the hydraulic actuator 46 and wherein the pneumatic system 50 is configured to pressurize the entire hydraulic circuit loop when the hydraulic system 40 is in the disabled configuration.

Example 5: the hybrid steering system 20 of any one of examples 3-4, wherein the hydraulic pump 44 is configured to be driven by an electric motor or an internal combustion engine 16 of the vehicle 10 when the hydraulic system 40 is in its activated configuration.

Example 6: the hybrid steering system 20 of any one of examples 2-5, wherein the pneumatic system 50 comprises a pneumatic pressure source 52, a vent 54 and a pneumatic control device 56 connected to the pneumatic pressure source, to the vent and to the fluid reservoir 42, the pneumatic control device being commutable between:
- a depressurized configuration, in which the pneumatic control device 56 connects the fluid reservoir 42 to the vent 54 and disconnects the fluid reservoir from the pneumatic pressure source 52 to depressurize the fluid reservoir; and
- a pressurized configuration, in which the pneumatic control device 56 connects the fluid reservoir 42 to the pneumatic pressure source 52 and disconnects the fluid reservoir from the vent 54 to pressurize the fluid reservoir.

Example 7: the hybrid steering system 20 of example 6, wherein the pneumatic control device 56 is configured to automatically commute in the pressurized configuration when the hydraulic system 40 is in the disabled configuration.

Example 8: the hybrid steering system 20 of any one of examples 6-7, wherein the pneumatic pressure source 52 is a compressed-air reservoir of the vehicle 10.

Example 9: the hybrid steering system 20 of any one of examples 1-8, wherein the mechanical linkage 22 comprises a steering box 26 and wherein the hydraulic system 40 is connected to the steering box and configured to apply the second torque to the steering box.

Example 10: the hybrid steering system 20 of any one of examples 1-9, wherein the steering assister 30 is an electric power steering system comprising an electric motor and wherein the electric power steering system is commutable between an activated configuration, in which the electric motor applies the first torque to the mechanical linkage 22, and a disabled configuration, in which the electric motor does not apply the first torque to the mechanical linkage.

Example 11: the hybrid steering system 20 of any one of examples 1-10, wherein the steering assister 30 and the hydraulic system 40 are configured to apply respectively the first torque and the second torque to the mechanical linkage 22 simultaneously.

Example 12: a vehicle 10 comprising the hybrid steering system 20 of any one of examples 1-11.

Example 13: a method for operating a hybrid steering system 20 according to any one of examples 1-11, the hybrid steering system further comprising a control unit 60 configured to control the steering assister 30, the hydraulic system 40 and the pneumatic system 50,
the method comprising controlling, by the control unit 60, the steering assister 30, the hydraulic system 40 and the pneumatic system 50 to either:
- apply both the first torque and the second torque to the mechanical linkage 22 to assist steering of the steerable wheels 14;
- apply only the first torque to the mechanical linkage 22 to assist steering of the steerable wheels 14 and pressurize the hydraulic system 40 with the pneumatic system 50; or
- apply only the second torque to the mechanical linkage 22 to assist steering of the steerable wheels 14.

Example 14: the method of example 13, wherein the mechanical linkage 22 comprises a steering column 24, wherein the hybrid steering system comprises a sensor 62 configured to provide the control unit 60 with data representative of a torque applied by the steering wheel 12 to the steering column 24, and wherein the method comprises controlling, by the control unit 60, the steering assister 30, the hydraulic system 40 and the pneumatic system 50 based on the data provided by the sensor 62 to the control unit.

Example 15: the method of any one of examples 13-14, wherein the method comprises controlling, by the control unit 60, the steering assister 30, the hydraulic system 40 and the pneumatic system 50 to apply only the first torque to the mechanical linkage 22 to assist steering of the steerable wheels 14 and pressurize the hydraulic system 40 with the pneumatic system 50 when a travel speed of the vehicle 10 is above a predefined value.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A hybrid steering system (20) for a vehicle (10), the hybrid steering system comprising:
- a mechanical linkage (22), configured to connect a steering wheel (12) of the vehicle (10) to steerable wheels (14) of the vehicle;
- a steering assister (30), connected to the mechanical linkage and configured to apply a first torque to the mechanical linkage to assist steering of the steerable wheels (14);
- a hydraulic system (40), distinct from the steering assister (30), connected to the mechanical linkage (22) and commutable between an activated configuration, in which the hydraulic system (40) applies a second torque to the mechanical linkage to assist steering of the steerable wheels (14), and a disabled configuration, in which the hydraulic system does not apply the second torque to the mechanical linkage; and
- a pneumatic system (50), connected to the hydraulic system (40) and configured to pressurize the hydraulic system (40) when the hydraulic system is in the disabled configuration.

2. The hybrid steering system (20) of claim 1, wherein the hydraulic system (40) comprises a fluid reservoir (42) and wherein the pneumatic system (50) is configured to pressurize the fluid reservoir (42) when the hydraulic system (40) is in the disabled configuration.

3. The hybrid steering system (20) of claim 2, wherein the hydraulic system (40) further comprises a hydraulic pump (44), a hydraulic actuator (46) and a hydraulic circuit (48) connecting together the fluid reservoir (42), the hydraulic pump and the hydraulic actuator, wherein, when the hydraulic system (40) is in its activated configuration, the hydraulic pump (44) feeds the hydraulic actuator (46) with oil from the fluid reservoir (42) and the hydraulic actuator applies the second torque to the mechanical linkage (22),
and wherein the pneumatic system (50) is configured to pressurize the fluid reservoir (42) and the hydraulic circuit (48) when the hydraulic system (40) is in the disabled configuration.

4. The hybrid steering system (20) of claim 3, wherein the hydraulic circuit (48) forms a loop between the fluid reservoir (42), the hydraulic pump (44) and the hydraulic actuator (46) and wherein the pneumatic system (50) is configured to pressurize the entire hydraulic circuit loop when the hydraulic system (40) is in the disabled configuration.

5. The hybrid steering system (20) of any one of claims 3-4, wherein the hydraulic pump (44) is configured to be driven by an electric motor or an internal combustion engine (16) of the vehicle (10) when the hydraulic system (40) is in its activated configuration.

6. The hybrid steering system (20) of any one of claims 2-5, wherein the pneumatic system (50) comprises a pneumatic pressure source (52), a vent (54) and a pneumatic control device (56) connected to the pneumatic pressure source, to the vent and to the fluid reservoir (42), the pneumatic control device being commutable between:
- a depressurized configuration, in which the pneumatic control device (56) connects the fluid reservoir (42) to the vent (54) and disconnects the fluid reservoir from the pneumatic pressure source (52) to depressurize the fluid reservoir; and
- a pressurized configuration, in which the pneumatic control device (56) connects the fluid reservoir (42) to the pneumatic pressure source (52) and disconnects the fluid reservoir from the vent (54) to pressurize the fluid reservoir.

7. The hybrid steering system (20) of claim 6, wherein the pneumatic control device (56) is configured to automatically commute in the pressurized configuration when the hydraulic system (40) is in the disabled configuration.

8. The hybrid steering system (20) of any one of claims 6-7, wherein the pneumatic pressure source (52) is a compressed-air reservoir of the vehicle (10).

9. The hybrid steering system (20) of any one of claims 1-8, wherein the mechanical linkage (22) comprises a steering box (26) and wherein the hydraulic system (40) is connected to the steering box and configured to apply the second torque to the steering box.

10. The hybrid steering system (20) of any one of claims 1-9, wherein the steering assister (30) is an electric power steering system comprising an electric motor and wherein the electric power steering system is commutable between an activated configuration, in which the electric motor applies the first torque to the mechanical linkage (22), and a disabled configuration, in which the electric motor does not apply the first torque to the mechanical linkage.

11. The hybrid steering system (20) of any one of claims 1-10, wherein the steering assister (30) and the hydraulic system (40) are configured to apply respectively the first torque and the second torque to the mechanical linkage (22) simultaneously.

12. A vehicle (10) comprising the hybrid steering system (20) of any one of claims 1-11.

13. A method for operating a hybrid steering system (20) according to any one of claims 1-11, the hybrid steering system further comprising a control unit (60) configured to control the steering assister (30), the hydraulic system (40) and the pneumatic system (50),
the method comprising controlling, by the control unit (60), the steering assister (30), the hydraulic system (40) and the pneumatic system (50) to either:
- apply both the first torque and the second torque to the mechanical linkage (22) to assist steering of the steerable wheels (14);
- apply only the first torque to the mechanical linkage (22) to assist steering of the steerable wheels (14) and pressurize the hydraulic system (40) with the pneumatic system (50); or
- apply only the second torque to the mechanical linkage (22) to assist steering of the steerable wheels (14).

14. The method of claim 13, wherein the mechanical linkage (22) comprises a steering column (24), wherein the hybrid steering system comprises a sensor (62) configured to provide the control unit (60) with data representative of a torque applied by the steering wheel (12) to the steering column (24),
and wherein the method comprises controlling, by the control unit (60), the steering assister (30), the hydraulic system (40) and the pneumatic system (50) based on the data provided by the sensor (62) to the control unit.

15. The method of any one of claims 13-14, wherein the method comprises controlling, by the control unit (60), the steering assister (30), the hydraulic system (40) and the pneumatic system (50) to apply only the first torque to the mechanical linkage (22) to assist steering of the steerable wheels (14) and pressurize the hydraulic system (40) with the pneumatic system (50) when a travel speed of the vehicle (10) is above a predefined value.
